(19)

**Europäisches Patentamt**
**European Patent Office**
**Office européen des brevets**

(11)  **EP 3 693 127 A1**

(12)

# EUROPEAN PATENT APPLICATION
published in accordance with Art. 153(4) EPC

(43) Date of publication:
**12.08.2020 Bulletin 2020/33**

(51) Int Cl.:
**B23K 35/30** $^{(2006.01)}$   **C22C 38/00** $^{(2006.01)}$
**C22C 38/54** $^{(2006.01)}$

(21) Application number: **18865121.0**

(22) Date of filing: **03.10.2018**

(86) International application number:
**PCT/JP2018/037099**

(87) International publication number:
**WO 2019/070002 (11.04.2019 Gazette 2019/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.10.2017  JP 2017193690**

(71) Applicant: **Nippon Steel Corporation
Tokyo 100-8071 (JP)**

(72) Inventors:
• **HIRATA, Hiroyuki**
  **Tokyo 100-8071 (JP)**
• **JOTOKU, Kana**
  **Tokyo 100-8071 (JP)**
• **KURIHARA, Shinnosuke**
  **Tokyo 100-8071 (JP)**
• **TANAKA, Katsuki**
  **Tokyo 100-8071 (JP)**

(74) Representative: **Zimmermann & Partner
Patentanwälte mbB
Postfach 330 920
80069 München (DE)**

(54) **WELDING MATERIAL FOR AUSTENITIC HEAT-RESISTANT STEEL, WELD METAL AND WELD STRUCTURE, AND METHOD FOR MANUFACTURING WELD METAL AND WELD STRUCTURE**

(57)    A welding material for austenitic heat resistant steel is provided that has a chemical composition which consists of, by mass%, C: 0.06 to 0.14%, Si: 0.10 to 0.40%, Mn: 2.0 to 4.0%, P: 0.020% or less, Cu: 2.0 to 4.0%, Ni: 15.0 to 19.0%, Cr: 16.0 to 20.0%, Mo: 0.50 to 1.50%, Nb: 0.30 to 0.60%, N: 0.10 to 0.30%, Al: 0.030% or less, O: 0.020% or less, S: 0 to 0.0030%, Sn: 0 to 0.0030%, Bi: 0 to 0.0030%, Zn: 0 to 0.0030%, Sb: 0 to 0.0030%, As: 0 to 0.0030%, V: 0 to 0.50%, Ti: 0 to 0.50%, Ta: 0 to 0.50%, Co: 0 to 2.0%, B: 0 to 0.020%, Ca: 0 to 0.020%, Mg: 0 to 0.020%, REM: 0 to 0.06%, with the balance being Fe and impurities, and which contains two or more types of element selected from S, Sn, Bi, Zn, Sb and As within a range that satisfies [$0.0005 \leq$ S + Sn + Bi + Zn + Sb + As $\leq 0.0030$].

**EP 3 693 127 A1**

**Description**

TECHNICAL FIELD

The present invention relates to a welding material for austenitic heat resistant steel, weld metal and a welded structure, as well as a method for producing the weld metal and the welded structure.

BACKGROUND ART

Conventionally, ASME T91 steel has been widely used as the superheater tube material of heat recovery steam generator. However, from the viewpoint of reducing the environmental load, the temperature of steam is being made increasingly higher. Because of the small content of Cr in the ASME T91 steel, the steam oxidation resistance properties of the ASME T91 steel are inadequate and the creep strength thereof is also inadequate. Therefore, efforts are being made to apply austenitic heat resistant stainless steels which are used in the superheater tubes of coal-fired power generation boilers disclosed, for example, in Patent Documents 1 and 2 to high temperature portions of superheater tubes.
In the case of making these kinds of austenitic heat resistant stainless steel into a structure, in most instances the steel is assembled by welding, and the welding materials disclosed in Patent Documents 3 and 4, for example, are used as the welding material for performing assembly work.

LIST OF PRIOR ART DOCUMENTS

PATENT DOCUMENTS

    Patent Document 1: JP2003-268503A
    Patent Document 2: JP2013-44013A
    Patent Document 3: JP6-142980A
    Patent Document 4: JP2015-110240A

SUMMARY OF INVENTION

TECHNICAL PROBLEM

In this connection, an heat recovery steam generator is not often operated continuously as is the case of a coal-fired power generation boiler, and it is common to repeat shutdown and operation in accordance with the required amount of electricity power generation. For example, the boiler may be operated only during the daytime when the demand for electric power is high, and shut down at night. As a result, heating and cooling of members such as a superheater tube used in the heat recovery steam generator are repeated.
In a case where heating to a high temperature and cooling are repeated in this way, thermal shock occurs in a superheater tube that includes a weld zone, due to a temperature difference in the superheater tube. Therefore, members constituting a superheater tube are required to have excellent characteristics with respect to thermal shock, that is, to be excellent in impact characteristics after being subjected to repeated thermal cycles. In particular, because the shape and material quality both tend to be discontinuous in a weld zone that includes weld metal, there are many cases in which a problem arises in a weld zone.
Although weld metal obtained by using the aforementioned welding materials disclosed in Patent Documents 3 and 4 stably provides excellent creep rupture strength, the impact characteristics of the metal subjected to repeated thermal cycles are not taken into consideration in Patent Documents 3 and 4, and it has been found that, depending on dimensions or structure of the members, sufficient performance may not be obtained in some cases, and room for improvement exists.
An objective of the present invention is to provide a welding material for austenitic heat resistant steel which provides weld metal that has sufficient impact characteristics even after high temperature heating and cooling are repeated, a weld metal made of the welding material for austenitic heat resistant steel, and a welded structure having the weld metal, and also a method for producing the weld metal and the welded structure.

SOLUTION TO PROBLEM

The present invention has been made to solve the problems described above, and the gist of the present invention is the following welding material for austenitic heat resistant steel, the weld metal and the welded structure, and the method for producing the weld metal and the welded structure.

(1) A welding material for austenitic heat resistant steel having a chemical composition which consists of, by mass%:

C: 0.06 to 0.14%,
Si: 0.10 to 0.40%,
Mn: 2.0 to 4.0%,
P: 0.020% or less,
Cu: 2.0 to 4.0%,
Ni: 15.0 to 19.0%,
Cr: 16.0 to 20.0%,
Mo: 0.50 to 1.50%,
Nb: 0.30 to 0.60%,
N: 0.10 to 0.30%,
Al: 0.030% or less,
O: 0.020% or less,
S: 0 to 0.0030%,
Sn: 0 to 0.0030%,
Bi: 0 to 0.0030%,
Zn: 0 to 0.0030%,
Sb: 0 to 0.0030%,
As: 0 to 0.0030%,
V: 0 to 0.50%,
Ti: 0 to 0.50%,
Ta: 0 to 0.50%,
Co: 0 to 2.0%,
B: 0 to 0.020%,
Ca: 0 to 0.020%,
Mg: 0 to 0.020%,
REM: 0 to 0.06%, and
the balance: Fe and impurities,
and which contains two or more types of element selected from S, Sn, Bi, Zn, Sb and As within a range satisfying formula (i) below:

$$0.0005 \leq S + Sn + Bi + Zn + Sb + As \leq 0.0030 \ ... \ (i)$$

where, each symbol of an element in the above formulas represents a content (mass%) of the corresponding element contained in the steel.

(2) The welding material for austenitic heat resistant steel according to (1) above, wherein the chemical composition contains, by mass%, one or more types of element selected from:

V: 0.01 to 0.50%,
Ti: 0.01 to 0.50%,
Ta: 0.01 to 0.50%,
Co: 0.01 to 2.0%,
B: 0.001 to 0.02%,
Ca: 0.001 to 0.02%,
Mg: 0.001 to 0.02% and
REM: 0.001 to 0.06%.

(3) The welding material for austenitic heat resistant steel according to (1) or (2) above, wherein:

the welding material is used for welding of a base metal that comprises austenitic heat resistant steel; and
a chemical composition of the base metal consists of, by mass%,

C: 0.05 to 0.15%,
Si: 0.10 to 0.30%,
Mn: 0.1 to 1.0%,
P: 0.040% or less,
S: 0.010% or less,
Cu: 2.0 to 4.0%,
Ni: 7.0 to 11.0%,
Cr: 16.0 to 20.0%,
Mo: 0.03 to 0.80%,
Nb: 0.30 to 0.60%,
N: 0.05 to 0.20%,
Al: 0.030% or less,
O: 0.020% or less,
V: 0 to 0.10%,
Ti: 0 to 0.10%,
Co: 0 to 1.0%,
W: 0 to 0.50%,
B: 0 to 0.005%,
Ca: 0 to 0.010%,
Mg: 0 to 0.010%,
REM: 0 to 0.10%, and
the balance: Fe and impurities.

(4) A weld metal made of the base metal according to (3) above and the welding material for austenitic heat resistant steel according to any one of (1) to (3) above.

(5) A welded structure having the weld metal according to (4) above.

(6) A method for producing weld metal, that produces weld metal by using the welding material for austenitic heat resistant steel according to any one of (1) to (3) above with respect to the base metal according to (3) above.

(7) A method for producing welded structure, that produces welded structure by using the welding material for austenitic heat resistant steel according to any one of (1) to (3) above with respect to the base metal according to (3) above.

ADVANTAGEOUS EFFECTS OF INVENTION

According to the present invention, a welding material for austenitic heat resistant steel which provides weld metal that has sufficient impact characteristics even after high temperature heating and cooling are repeated, a weld metal made of the welding material for austenitic heat resistant steel, and a welded structure having the weld metal, as well as a method for producing the weld metal and the welded structure can be provided.

BRIEF DESCRIPTION OF DRAWINGS

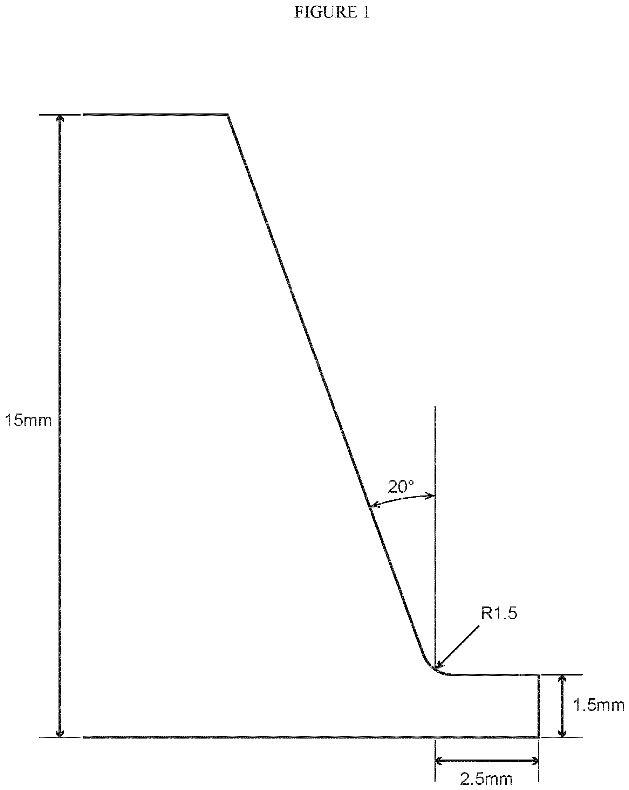

[Figure 1] Figure 1 is a schematic cross-sectional view illustrating the shape of a plate which was subjected to beveling in the Examples.

DESCRIPTION OF EMBODIMENTS

The present inventors conducted various studies regarding impact characteristics of weld metal that is subjected to high temperature heating and cooling, in order to obtain weld metal having sufficient impact characteristics even after high temperature heating and cooling are repeated. As a result, the present inventors obtained the following findings.

(a) When the content of S, Sn, Bi, Zn, Sb and As in weld metal increases, the decrease in toughness is noticeable.

(b) Columnar crystal boundaries intermix at a fracture surface after an impact test, and when the content of S, Sn, Bi, Zn, Sb and As is large, the proportion thereof increases.

(c) There is a tendency for the proportion of columnar crystal boundaries intermixing at a fracture surface to be saturated when high temperature heating and cooling are repeated multiple times.

The following conclusion was reached based on these facts. Specifically, S, Sn, Bi, Zn, Sb and As which are contained in weld metal undergo solidification segregation during solidification of a weld and, in addition, segregate thereafter at columnar crystal boundaries during the course of heating to a high temperature and cooling from the high temperature that are repeated, resulting in embrittlement of the columnar crystal boundaries. It is therefore considered that when the content of the aforementioned S and Sn and the like increases, the impact characteristics decrease and, in addition, the proportion that columnar crystal boundaries occupy on the fracture surface increases.

Therefore, as a result of conducting studies regarding measures to prevent the above problem, the present inventors discovered that it is effective to reduce the content of S, Sn, Bi, Zn, Sb and As as much as possible.

However, when these elements were decreased to an extreme degree, although it could be confirmed that the required impact characteristics after being subjected to high temperature heating and cooling were indeed obtained, it was found that the weld penetration was insufficient and so-called "Uranami forming ability" deteriorates by an extreme amount. One method to overcome this problem is to increase the weld heat input. However, increasing the heat input increases the solidification cracking susceptibility during welding.

As a result of studies conducted to solve this problem, the present inventors discovered that by containing two or more types of element selected from S, Sn, Bi, Zn, Sb and As in a total amount within a range of 0.0005 to 0.0030%, it is possible to secure impact characteristics after repeated heating and cooling and to also increase the weld penetration depth. It is considered that this is because these elements exert an influence on convection within the molten pool during welding and promote heat transport in the vertical direction, or evaporate from the molten pool surface and ionize in the arc to form a current path and increase the current density of the arc.

The present invention was made based on the findings described above. The respective requirements of the present invention are described in detail hereunder.

(A) Chemical Composition of Welding Material

The reasons for limiting each element are as follows. Note that, the symbol "%" with respect to content in the following description means "mass percent".

C: 0.06 to 0.14%

C is an austenite former, and increases the structural stability of weld metal at high temperatures and also forms fine carbides and contributes to securing creep strength. However, if C is contained in excess, a large amount of coarse carbides will precipitate, and on the contrary will result in a decrease in creep strength and will also be detrimental to the impact characteristics. Therefore, the content of C is set within the range of 0.06 to 0.14%. The content of C is preferably 0.07% or more, and more preferably is 0.08% or more. Further, the content of C is preferably 0.13% or less, and more preferably is 0.12% or less.

Si: 0.10 to 0.40%

Although Si is contained as a deoxidizer, if contained in excess, it will increase the solidification cracking susceptibility during welding. However, if the content of Si is excessively reduced, a deoxidizing effect will not be adequately obtained and the cleanliness of the welding material will decrease, and it will also lead to an increase in the production cost. Therefore, the content of Si is set in the range of 0.10 to 0.40%. The content of Si is preferably 0.15% or more, and more preferably is 0.20% or more. Further, the content of Si is preferably 0.35% or less, and more preferably is 0.30% or less.

Mn: 2.0 to 4.0%

Mn inhibits the scattering of nitrogen from the molten pool surface by lowering the activity of nitrogen of the molten metal during welding, and thereby indirectly contributes to securing the tensile strength and creep strength of weld metal. However, if Mn is contained in excess, it will lead to embrittlement. Therefore, the content of Mn is set within the range of 2.0 to 4.0%. The content of Mn is preferably 2.2% or more, and more preferably is 2.5% or more. Further, the content of Mn is preferably not more than 3.8%, and more preferably is not more than 3.5%.

P: 0.020% or less

P is contained as an impurity, and segregates at a final solidification portion during solidification of the weld metal and causes the melting point thereof to decrease and thus increases the solidification cracking susceptibility. Therefore, it is necessary to make the content of P 0.020% or less. The content of P is preferably 0.015% or less, and more preferably is 0.010% or less. Note that, although it is not particularly necessary to set a lower limit for the content of P, that is, although the content may be 0%, an extreme reduction will lead to an increase in the production cost of the welding material. Therefore, the content of P is preferably 0.0005% or more, and more preferably is 0.001% or more.

Cu: 2.0 to 4.0%

Cu is an element that ensures the structural stability of weld metal at high temperatures and also precipitates as a Cu-enriched phase, and is an effective element for improving creep strength. However, if Cu is contained in excess, the Cu-enriched phase will excessively precipitate and will be detrimental to the impact characteristics. Therefore, the content of Cu is set within the range of 2.0 to 4.0%. The content of Cu is preferably 2.3% or more, and more preferably is 2.5% or more. Further, the content of Cu is preferably not more than 3.8%, and more preferably is not more than 3.5%.

Ni: 15.0 to 19.0%

Ni ensures the structural stability of weld metal at high temperatures and contributes to improving creep strength. However, Ni is an expensive element, and if contained in a large amount it will result in an increase in the production cost of the welding material. In addition, if Ni is contained in excess, Ni will lower the nitrogen solubility in the molten metal during welding and will, on the contrary, be detrimental to the creep strength. Therefore, the content of Ni is set within the range of 15.0 to 19.0%. The content of Ni is preferably 15.5% or more, and more preferably is 16.0% or more. Further, the content of Ni is preferably not more than 18.5%, and more preferably is not more than 18.0%.

Cr: 16.0 to 20.0%

Cr is contained in order to ensure oxidation resistance and corrosion resistance of the weld metal at high temperatures. However, if Cr is contained in excess, it will be detrimental to the structural stability at high temperatures of the weld metal and will lead to a reduction in creep strength. Therefore, the content of Cr is set within the range of 16.0 to 20.0%. The content of Cr is preferably 16.5% or more, and more preferably is 17.0% or more. Further, the content of Cr is preferably not more than 19.5%, and more preferably is not more than 19.0%.

Mo: 0.50 to 1.50%

Mo is an element that dissolves in the matrix and contributes to enhancement of creep strength of the weld metal. However, even when Mo is contained in excess, the effect is saturated and the Mo also causes the structural stability of the weld metal at high temperatures to decrease and, on the contrary, results in a reduction in creep strength. Therefore, the content of Mo is set within the range of 0.50 to 1.50%. The content of Mo is preferably 0.60% or more, and more preferably is 0.80% or more. Further, the content of Mo is preferably not more than 1.40%, and more preferably is not more than 1.20%.

Nb: 0.30 to 0.60%

Nb precipitates within grains as fine carbides, nitrides or carbo-nitrides during use at a high temperature and contributes to enhancing the creep strength of the weld metal. However, if contained in excess, a large amount of coarse carbo-nitrides will precipitate, and will result in a decrease in creep strength and creep ductility. Therefore, the content of Nb is set in the range of 0.30 to 0.60%. The content of Nb is preferably 0.32% or more, and more preferably is 0.35% or more. Further, the content of Nb is preferably 0.58% or less, and more preferably is 0.55% or less.

N: 0.10 to 0.30%

N enhances the structural stability of weld metal at high temperatures, and also dissolves or finely precipitates within grains as nitrides and significantly contributes to increasing creep strength. However, if contained in excess, a large amount of nitrides will precipitate during use at a high temperature, and will result in a decrease in creep ductility. Therefore, the content of N is set in the range of 0.10 to 0.30%. The content of N is preferably 0.12% or more, and more preferably is 0.15% or more. Further, the content of N is preferably 0.28% or less, and more preferably is 0.25% or less.

Al: 0.030% or less

Although Al is contained as a deoxidizer, if a large amount of Al is contained it will be noticeably detrimental to cleanliness and will reduce the workability of the welding material and the ductility of the weld metal. Therefore, the content of Al is set to 0.030% or less. The content of Al is preferably 0.025% or less, and more preferably is 0.020% or less. Note that, although it is not particularly necessary to set a lower limit for the content of Al, that is, although the content may be 0%, an extreme reduction will lead to an increase in the production cost of the welding material. Therefore, the content of Al is preferably 0.0005% or more, and more preferably is 0.001% or more.

O: 0.020% or less

Although O (oxygen) is contained as an impurity, if contained in a large amount, it will reduce the workability of the welding material and the ductility of the weld metal. Therefore, the content of O is 0.020% or less. The content of O is preferably 0.015% or less, and more preferably is 0.010% or less. Note that, although it is not particularly necessary to set a lower limit for the content of O, that is, although the content may be 0%, an extreme reduction will lead to an increase in the production cost of the material. Therefore, the content of O is preferably 0.0005% or more, and more preferably is 0.0010% or more.

S: 0 to 0.0030%

Sn: 0 to 0.0030%

Bi: 0 to 0.0030%

Zn: 0 to 0.0030%

Sb: 0 to 0.0030%

As: 0 to 0.0030%

S, Sn, Bi, Zn, Sb and As undergo solidification segregation during solidification of a weld and, in addition, thereafter segregate at columnar crystal boundaries of the weld metal during the course of heating to a high temperature and cooling from the high temperature that are repeated, for example, during use of a welded structure that includes the weld metal, and result in a decrease in impact characteristics. On the other hand, these elements increase the weld penetration depth during welding, and in particular are effective elements for preventing the occurrence of lack of weld penetration during root pass welding.

To compatibly achieve both weldability and impact characteristics after repeated heating and cooling, it is necessary to contain two or more types of element selected from these elements within a range that satisfies the following formula (i). The left-hand value in formula (i) is preferably 0.0008, and more preferably is 0.0010. Further, the right-hand value in formula (i) is preferably 0.0028, and more preferably is 0.0025:

$$0.0005 \leq S + Sn + Bi + Zn + Sb + As \leq 0.0030 \ldots (i)$$

where, each symbol of an element in the above formula represents a content of (mass%) of the corresponding element that is contained in the steel.

Note that, although no particular limit is set with respect to the lower limit of the content of each element, it is preferable that, within a range satisfying the above formula (i), the content of any of the elements described above is 0.0001% or more, more preferably is 0.0002% or more, and further preferably is 0.0003% or more.

In the chemical composition of the welding material of the present invention, in addition to the elements described above, one or more types of element selected from V, Ti, Ta, Co, B, Ca, Mg and REM may also be contained within the ranges described below. The reasons for limiting each element are described hereunder.

V: 0 to 0.50%

V combines with C and/or N and precipitates within grains as fine carbides, nitrides or carbo-nitrides and contributes to the creep strength at a high temperature, and therefore may be contained as necessary. However, if contained in excess, a large amount of carbo-nitrides will precipitate and result in a reduction in the creep ductility. Therefore, the content of V is set to 0.50% or less. The content of V is preferably 0.45% or less, and more preferably is 0.40% or less. Note that, when it is desired to obtain the aforementioned effect, the content of V is preferably 0.01% or more, and more preferably is 0.02% or more.

Ti: 0 to 0.50%

Ti, similarly to V, precipitates within grains as fine carbides, nitrides or carbo-nitrides and contributes to enhancing the creep strength at a high temperature, and therefore may be contained as necessary. However, if contained in excess, a large amount of carbo-nitrides will precipitate and result in a reduction in the creep ductility. Therefore, the content of Ti is set to 0.50% or less. The content of Ti is preferably 0.45% or less, and more preferably is 0.40% or less. Note that, when it is desired to obtain the aforementioned effect, the content of Ti is preferably 0.01% or more, and more preferably is 0.02% or more.

Ta: 0 to 0.50%

Similarly to V and Ti, Ta also precipitates within grains as fine carbides, nitrides or carbo-nitrides and contributes to the creep strength at a high temperature, and therefore may be contained as necessary. However, if contained in excess, a large amount of carbo-nitrides will precipitate and result in a reduction in the creep ductility. Therefore, the content of Ta is set to 0.50% or less. The content of Ta is preferably 0.45% or less, and more preferably is 0.40% or less. Note that, when it is desired to obtain the aforementioned effect, the content of Ta is preferably 0.01% or more, and more preferably 0.02% or more.

Co: 0 to 2.0%

Co enhances the structural stability at a high temperature of the weld metal and contributes to improving creep strength, similarly to Ni and Cu, and therefore may be contained as necessary. However, because Co is an extremely expensive element, if contained in excess it will result in a significant increase in cost. Therefore, the content of Co is set to 2.0% or less. The content of Co is preferably 1.5% or less, and more preferably 1.0% or less. Note that, when it is desired to obtain the aforementioned effect, the content of Co is preferably 0.01% or more, and more preferably 0.02% or more.

B: 0 to 0.020%

B segregates at columnar crystal boundaries of weld metal during high temperature use and strengthens the grain boundaries and also causes grain boundary carbides to finely disperse and is thus an effective element for enhancing creep strength, and may be contained as necessary. However, if contained in excess, B will increase the solidification cracking susceptibility during welding. Therefore, the content of B is set to 0.020% or less. The content of B is preferably 0.018% or less, and more preferably is 0.015% or less. Note that, when it is desired to obtain the aforementioned effect, the content of B is preferably 0.001% or more, and more preferably 0.002% or more.

Ca: 0 to 0.020%

Ca has an effect that improves hot workability during production of welding material, and therefore may be contained as necessary. However, if contained in excess, Ca will combine with oxygen and cause the cleanliness to markedly decrease, and on the contrary will cause the hot workability to deteriorate. Therefore, the content of Ca is set to 0.020% or less. The content of Ca is preferably 0.015% or less, and more preferably is 0.010% or less. Note that, when it is desired to obtain the aforementioned effect, the content of Ca is preferably 0.0005% or more, and more preferably is 0.001% or more.

Mg: 0 to 0.020%

Similarly to Ca, Mg has an effect that improves hot workability during production of welding material, and therefore may be contained as necessary. However, if contained in excess, Mg will combine with oxygen and cause the cleanliness to markedly decrease, and on the contrary will cause the hot workability to deteriorate. Therefore, the content of Mg is set to 0.020% or less. The content of Mg is preferably 0.015% or less, and more preferably 0.010% or less. Note that, when it is desired to obtain the aforementioned effect, the content of Mg is preferably 0.0005% or more, and more preferably 0.001% or more.

REM: 0 to 0.06%

Similarly to Ca and Mg, REM has an effect that improves hot workability during production of welding material, and therefore may be contained as necessary. However, if contained in excess, REM will combine with oxygen and cause the cleanliness to markedly decrease, and on the contrary will cause the hot workability to deteriorate. Therefore, the content of REM is set to 0.06% or less. The content of REM is preferably 0.05% or less, and more preferably 0.04% or less. Note that, when it is desired to obtain the aforementioned effect, the content of REM is preferably 0.001% or more, and more preferably 0.002% or more.

As used herein, the term "REM" refers to a total of 17 elements that are Sc, Y and the lanthanoids, and the aforementioned content of REM means the total content of these elements.

In the chemical composition of the welding material of the present invention, the balance is Fe and impurities. As used herein, the term "impurities" refers to components which, during industrial production of the steel, are mixed in from raw material such as ore or scrap or due to various factors in the production process, and which are allowed within a range that does not adversely affect the present invention.

(B) Method for producing weld metal

The weld metal according to the present invention is produced by welding a base metal of austenitic heat resistant steel using the aforementioned welding material (filler material). Although a welding method for obtaining the aforementioned weld metal is not particularly limited, TIG welding, MIG welding, shielded metal arc welding, submerged arc welding and laser welding may be mentioned as examples thereof.

Note that a preferable composition of the base metal of the austenitic heat resistant steel is not particularly limited. For example, the chemical composition of the base metal preferably consists of, by mass%, C: 0.05 to 0.15%, Si: 0.10 to 0.30%, Mn: 0.1 to 1.0%, P: 0.040% or less, S: 0.010% or less, Cu: 2.0 to 4.0%, Ni: 7.0 to 11.0%, Cr: 16.0 to 20.0%, Mo: 0.03 to 0.80%, Nb: 0.30 to 0.60%, N: 0.05 to 0.20%, Al: 0.030% or less, O: 0.020% or less, V: 0 to 0.10%, Ti: 0 to 0.10%, Co: 0 to 1.0%, W: 0 to 0.50%, B: 0 to 0.005%, Ca: 0 to 0.010%, Mg: 0 to 0.010% and REM: 0 to 0.10%, with the balance being Fe and impurities.

The chemical composition of the base metal may contain one or more types of element selected from, by mass%, V: 0.01 to 0.10%, Ti: 0.01 to 0.10%, Co: 0.01 to 1.0%, W: 0.01 to 0.50%, B: 0.0002 to 0.005%, Ca: 0.0005 to 0.010%, Mg: 0.0005 to 0.010% and REM: 0.0005 to 0.10%.

Further, although a method for producing the aforementioned base metal and welding material (filler material) is not particularly limited, the base metal of austenitic stainless steel and the welding material (filler material) can be produced by subjecting a steel with an adjusted chemical composition to hot forging, hot rolling, heat treatment and machining in that order according to a normal method.

(C) Welded Structure

The welded structure according to the present invention is a structure that has the weld metal mentioned above. For example, the welded structure is composed of weld metal and base metal. That is, the welded structure is produced by performing welding using the welding material according to the present invention with respect to the aforementioned base metal. The base metal is made of metal, and preferably is a steel material, more preferably is stainless steel, and further preferably is austenitic heat resistant steel. Note that the specific shape of the welded structure and a specific manner of welding (welding position) for obtaining the welded structure are not particularly limited.

Hereunder, the present invention is described specifically by way of examples, although the present invention is not limited to these examples.

EXAMPLE 1

Plates (base metals) having a thickness of 15 mm, a width of 50 mm, and a length of 100 mm and plates having a thickness of 4 mm, a width of 200 mm, and a length of 500 mm were prepared from ingots that were cast by melting steels having the chemical compositions shown in Table 1, by performing hot forging, hot rolling, heat treatment and machining. In addition, the plates having a thickness of 4 mm were used to prepare 2-mm square cut fillers having a length of 500 mm by machining. Various performance evaluation tests that are described below were conducted using these plates.

[Table 1]

Table 1

| Steel | Chemical Composition (mass%; balance: Fe and impurities) | | | | | | | | | | | | | | | | | | | Formula (i)[†] middle value |
| --- | --- | --- | --- | --- | --- | --- | --- | --- | --- | --- | --- | --- | --- | --- | --- | --- | --- | --- | --- | --- |
| | C | Si | Mn | P | S | Cu | Ni | Cr | Mo | Nb | N | Al | O | Sn | Bi | Zn | Sb | As | Other | |
| A | 0.10 | 0.26 | 2.9 | 0.009 | 0.0012 | 3.1 | 16.8 | 18.2 | 0.90 | 0.43 | 0.18 | 0.004 | 0.009 | 0.0013 | - | - | - | - | - | 0.0025 |
| B | 0.08 | 0.20 | 3.5 | 0.010 | 0.0005 | 3.0 | 17.9 | 17.6 | 1.10 | 0.36 | 0.25 | 0.002 | 0.012 | - | 0.0003 | - | - | - | - | 0.0008 |
| C | 0.12 | 0.29 | 2.6 | 0.015 | 0.0020 | 2.2 | 16.0 | 19.0 | 1.30 | 0.33 | 0.20 | 0.006 | 0.006 | 0.0005 | - | 0.0003 | - | - | - | 0.0028 |
| D | 0.07 | 0.25 | 2.8 | 0.012 | 0.0015 | 3.7 | 18.5 | 17.0 | 0.80 | 0.45 | 0.18 | 0.005 | 0.007 | 0.0005 | 0.0002 | 0.0003 | 0.0002 | 0.0003 | V: 0.02, B: 0.002, Ca: 0.002 | 0.0030 |
| E | 0.09 | 0.15 | 2.3 | 0.020 | 0.0004 | 3.5 | 17.2 | 17.9 | 0.70 | 0.53 | 0.15 | 0.003 | 0.010 | 0.0006 | - | - | - | - | Co: 0.05, REM: 0.018 | 0.0010 |
| F | 0.13 | 0.34 | 3.8 | 0.010 | 0.0011 | 2.5 | 15.5 | 19.3 | 1.20 | 0.58 | 0.13 | 0.005 | 0.007 | 0.0005 | - | 0.0009 | - | - | Ti: 0.05, Ta: 0.08, Mg: 0.001 | 0.0025 |
| G | 0.11 | 0.38 | 2.1 | 0.008 | 0.0022 | 2.7 | 18.2 | 16.8 | 0.90 | 0.38 | 0.22 | 0.006 | 0.005 | 0.0010 | - | - | - | - | - | _0.0032_ |
| H | 0.10 | 0.19 | 2.6 | 0.009 | 0.0018 | 2.6 | 17.7 | 17.5 | 0.80 | 0.40 | 0.17 | 0.005 | 0.006 | 0.0008 | 0.0003 | 0.0003 | 0.0004 | 0.0003 | - | _0.0039_ |
| I | 0.06 | 0.29 | 2.8 | 0.009 | 0.0003 | 3.0 | 16.5 | 18.0 | 1.00 | 0.42 | 0.28 | 0.012 | 0.002 | - | - | - | - | - | Ca: 0.005 | _0.0003_ |
| J | 0.08 | 0.37 | 2.0 | 0.012 | 0.0002 | 2.5 | 17.0 | 18.1 | 1.00 | 0.34 | 0.21 | 0.014 | 0.002 | 0.0002 | - | - | - | - | Ta: 0.03 | _0.0004_ |

[†] $0.0005 \leq S+Sn+Bi+Zn+Sb+As \leq 0.0030$ ...(i)

<Uranami forming ability>

A bevel having the shape shown in Figure 1 was prepared at an end part in the longitudinal direction of the aforementioned base metal. Thereafter, two of the base metals with the bevel were butted together, and butt welding was performed by TIG welding using a cut filler obtained from the same plate as each base metal as filler material. Two welded joints were prepared for each of the base metals, respectively, with a heat input of 9 kJ/cm. Among the obtained welded joints, those in which a root bead was formed across the entire length of the weld line in both welded joints were determined as having good Uranami forming ability, and were determined as "pass". In contrast, in a case where there was a portion in which a root bead was not formed at even one part among the two welded joints, the welded joints were determined as "fail".

<Impact characteristics>

Thereafter, in a successive manner, multi-pass welding was performed by manual TIG welding in the bevel using a cut filler obtained from the same plate as each base metal as filler material. The heat input was set in the range of 9 to 15 kJ/cm, and two welded joints were prepared for each of the base metals.
Thereafter, a cycle of heating and cooling consisting of "room temperature → 650°C × 108 hours → room temperature" was repeated five times for one of the welded joints, and thereafter three full-size Charpy impact test specimens having a V notch in weld metal were taken, and a Charpy impact test was performed at normal temperature. Test specimens for which the average value of absorbed energy was 27 J or higher were determined as "pass", and those for which the average value was below 27 J were determined as "fail".

<Creep rupture strength>

In addition, a round-bar creep rupture test specimen was taken from the remaining one welded joint in a manner so that the weld metal was at the center of the parallel portion, and a creep rupture test was performed under conditions of 650°C and 216 MPa in which the target rupture time of the base metal was approximately 1,000 hours. A welded joint for which the rupture time was 90% or more of the target rupture time of the base metal was determined as "pass".
A summary of the results of these tests is shown in Table 2.

[Table 2]

Table 2

| Test No. | Steel | Uranami forming ability | Impact Characteristics | Creep Rupture Strength |
|---|---|---|---|---|
| 1 | A | Pass | Pass | Pass |
| 2 | B | Pass | Pass | Pass |
| 3 | C | Pass | Pass | Pass |
| 4 | D | Pass | Pass | Pass |
| 5 | E | Pass | Pass | Pass |
| 6 | F | Pass | Pass | Pass |
| 7 | G | Pass | Fail | Pass |
| 8 | H | Pass | Fail | Pass |
| 9 | I | Fail | Pass | Pass |
| 10 | J | Fail | Pass | Pass |

As will be understood from Table 2, the results showed that in Test Nos. 1 to 6 in which steels A to F that satisfied the requirements defined by the present invention were used for both the base metal and filler material, the test specimens had the required Uranami forming ability during production of the welded joints and were also excellent in impact characteristics after high temperature heating and cooling were repeated.
In contrast, with respect to steels G and H as Comparative Examples, because these steels exceeded the upper limit of formula (i), in Test Nos. 7 and 8 which used these steels, the results showed that the impact characteristics after high temperature heating and cooling were repeated were poor. Further, because steels I and J were below the lower limit of formula (i), in Test Nos. 9 and 10 which used these steels, sufficient weld penetration depth was not obtained, and the Uranami forming ability was not satisfactory.

EXAMPLE 2

Plate materials (base metals) having a thickness of 15 mm, a width of 50 mm, and a length of 100 mm were prepared from ingots that were cast by melting steels having the chemical compositions shown in Table 3, by performing hot forging, hot rolling, heat treatment and machining. Various performance evaluation tests that are described below were conducted using these plate materials.

[Table 3]

Table 3

| Steel | Chemical Composition (mass%; balance: Fe and impurities) | | | | | | | | | | | | | |
|---|---|---|---|---|---|---|---|---|---|---|---|---|---|---|
| | C | Si | Mn | P | S | Cu | Ni | Cr | Mo | Nb | N | Al | O | Other |
| K | 0.08 | 0.22 | 0.7 | 0.025 | 0.0018 | 2.8 | 8.8 | 18.0 | 0.18 | 0.46 | 0.09 | 0.006 | 0.007 | - |
| L | 0.10 | 0.18 | 0.6 | 0.036 | 0.0002 | 3.2 | 8.7 | 17.7 | 0.08 | 0.45 | 0.06 | 0.005 | 0.008 | B: 0.001, Ti: 0.05, Mg: 0.001 |
| M | 0.15 | 0.30 | 0.8 | 0.028 | 0.0015 | 3.1 | 7.4 | 18.3 | 0.05 | 0.39 | 0.11 | 0.004 | 0.007 | W: 0.04, V: 0.02, Ca: 0.002 |
| N | 0.05 | 0.26 | 1.0 | 0.030 | 0.0010 | 3.5 | 10.5 | 18.2 | 0.23 | 0.50 | 0.15 | 0.005 | 0.006 | Co: 0.21, REM: 0.01 |

<Impact characteristics>

A bevel having the shape shown in Figure 1 was prepared at an end part in the longitudinal direction of the aforementioned base metal. Thereafter, two of the base metals with the bevel were butted together, and multi-pass welding was performed by manual TIG welding in the bevel using a cut filler obtained from the plate material of steel A as filler material. The heat input was set in the range of 9 to 15 kJ/cm, and two welded joints were prepared for each of the base metals.

Thereafter, a cycle of heating and cooling consisting of "room temperature → 650°C × 108 hours → room temperature" was repeated five times for one of the welded joints, and thereafter three full-size Charpy impact test specimens having a V notch in weld metal were taken, and a Charpy impact test was performed at normal temperature. Test specimens for which the average value of absorbed energy was 27 J or higher were determined as "pass", and those for which the average value was below 27 J were determined as "fail".

<Creep rupture strength>

In addition, a round-bar creep rupture test specimen was taken from the remaining one welded joint in a manner so that the weld metal was at the center of the parallel portion, and a creep rupture test was performed under conditions of 650°C and 216 MPa in which the target rupture time of the base metal was approximately 1,000 hours. A welded joint for which the rupture time was 90% or more of the target rupture time of the base metal was determined as "pass".

A summary of the results of these tests is shown in Table 4.

[Table 4]

Table 4

| Test No. | Base Metal | Filler Material | Impact Characteristics | Creep Rupture Strength |
|---|---|---|---|---|
| 11 | K | | Pass | Pass |
| 12 | L | A | Pass | Pass |
| 13 | M | | Pass | Pass |
| 14 | N | | Pass | Pass |

As will be understood from Table 4, the results showed that in Test Nos. 11 to 14 in which the chemical composition of the welding material satisfied the requirements defined by the present invention, the test specimens had the required Uranami forming ability during production of the welded joints and were also excellent in impact characteristics after high temperature heating and cooling were repeated.

As described above, it was found that the required weldability in fabrication and weld crack resistance as well as excellent creep strength were obtained only in a case where the requirements of the present invention were satisfied.

INDUSTRIAL APPLICABILITY

According to the present invention, a welding material for austenitic heat resistant steel which provides weld metal that has sufficient impact characteristics even after high temperature heating and cooling are repeated, a weld metal made of the welding material for austenitic heat resistant steel, and a welded structure having the weld metal, as well as a method for producing the weld metal and a method for producing the welded structure can be provided.

**Claims**

1. A welding material for austenitic heat resistant steel having a chemical composition which consists of, by mass%,
    C: 0.06 to 0.14%,
    Si: 0.10 to 0.40%,
    Mn: 2.0 to 4.0%,
    P: 0.020% or less,
    Cu: 2.0 to 4.0%,

Ni: 15.0 to 19.0%,
Cr: 16.0 to 20.0%,
Mo: 0.50 to 1.50%,
Nb: 0.30 to 0.60%,
N: 0.10 to 0.30%,
Al: 0.030% or less,
O: 0.020% or less,
S: 0 to 0.0030%,
Sn: 0 to 0.0030%,
Bi: 0 to 0.0030%,
Zn: 0 to 0.0030%,
Sb: 0 to 0.0030%,
As: 0 to 0.0030%,
V: 0 to 0.50%,
Ti: 0 to 0.50%,
Ta: 0 to 0.50%,
Co: 0 to 2.0%,
B: 0 to 0.020%,
Ca: 0 to 0.020%,
Mg: 0 to 0.020%,
REM: 0 to 0.06%, and
the balance: Fe and impurities,
and which contains two or more types of element selected from S, Sn, Bi, Zn, Sb and As within a range satisfying formula (i) below:

$$0.0005 \leq S + Sn + Bi + Zn + Sb + As \leq 0.0030 \text{ ... (i)}$$

where, each symbol of an element in the above formula represents a content (mass%) of a corresponding element contained in the steel.

2. The welding material for austenitic heat resistant steel according to claim 1, wherein the chemical composition contains, by mass%, one or more types of element selected from:

V: 0.01 to 0.50%,
Ti: 0.01 to 0.50%,
Ta: 0.01 to 0.50%,
Co: 0.01 to 2.0%,
B: 0.001 to 0.02%,
Ca: 0.001 to 0.02%,
Mg: 0.001 to 0.02%, and
REM: 0.001 to 0.06%.

3. The welding material for austenitic heat resistant steel according to claim 1 or claim 2, wherein:

the welding material is used for welding of a base metal comprising austenitic heat resistant steel; and
a chemical composition of the base metal consists of, by mass%,
C: 0.05 to 0.15%,
Si: 0.10 to 0.30%,
Mn: 0.1 to 1.0%,
P: 0.040% or less,
S: 0.010% or less,
Cu: 2.0 to 4.0%,
Ni: 7.0 to 11.0%,
Cr: 16.0 to 20.0%,
Mo: 0.03 to 0.80%,
Nb: 0.30 to 0.60%,

N: 0.05 to 0.20%,
Al: 0.030% or less,
O: 0.020% or less,
V: 0 to 0.10%,
Ti: 0 to 0.10%,
Co: 0 to 1.0%,
W: 0 to 0.50%,
B: 0 to 0.005%,
Ca: 0 to 0.010%,
Mg: 0 to 0.010%,
REM: 0 to 0.10%, and
the balance: Fe and impurities.

4. A weld metal made of the base metal according to claim 3 and the welding material for austenitic heat resistant steel according to any one of claim 1 to claim 3.

5. A welded structure having the weld metal according to claim 4.

6. A method for producing weld metal, that produces weld metal by using the welding material for austenitic heat resistant steel according to any one of claim 1 to claim 3 with respect to the base metal according to claim 3.

7. A method for producing welded structure, that produces welded structure by using the welding material for austenitic heat resistant steel according to any one of claim 1 to claim 3 with respect to the base metal according to claim 3.

FIGURE 1

## INTERNATIONAL SEARCH REPORT

| International application No. |
|---|
| PCT/JP2018/037099 |

A. CLASSIFICATION OF SUBJECT MATTER
Int.Cl. B23K35/30(2006.01)i, C22C38/00(2006.01)i, C22C38/54(2006.01)i

According to International Patent Classification (IPC) or to both national classification and IPC

B. FIELDS SEARCHED

Minimum documentation searched (classification system followed by classification symbols)
Int.Cl. B23K35/30, C22C38/00, C22C38/54

Documentation searched other than minimum documentation to the extent that such documents are included in the fields searched
Published examined utility model applications of Japan       1922–1996
Published unexamined utility model applications of Japan     1971–2018
Registered utility model specifications of Japan             1996–2018
Published registered utility model applications of Japan     1994–2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-110240 A (NIPPON STEEL & SUMITOMO METAL CORPORATION) 18 June 2015 (Family: none) | 1-7 |
| A | JP 2017-14575 A (NIPPON STEEL & SUMITOMO METAL CORPORATION) 19 January 2017 (Family: none) | 1-7 |
| A | JP 6-142980 A (SUMITOMO METAL INDUSTRIES, LTD.) 24 May 1994 (Family: none) | 1-7 |
| A | JP 2000-328198 A (SUMITOMO METAL INDUSTRIES, LTD.) 28 November 2000 (Family: none) | 1-7 |
| P, A | JP 2017-202492 A (NIPPON STEEL & SUMITOMO METAL CORPORATION) 16 November 2017 (Family: none) | 1-7 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December 2018 (21.12.2018) | 08 January 2019 (08.01.2019) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003268503 A
- JP 2013044013 A
- JP 6142980 A
- JP 2015110240 A